# EUROPEAN PATENT APPLICATION

(11) **EP 1 287 735 A2**
(43) Date of publication of application: **05.03.2003**
(21) Application number: 01941297.2
(22) Date of filing: 01.06.2001
(51) Int. Cl.: A01G 15/00

(54) **METHOD FOR INFLUENCING ATMOSPHERIC FORMATIONS**

(30) Priority: 02.06.2000 RU 2000113945
(71) Applicant: Semiola, S.A. de C.V., Mexico, D.F. 11850 (MX)
(72) Inventor: KOMAROV, Sergei, Moscu ul, 105077 (RU); Bukharov, Mikhail, Moscu ul, 109377 (RU); PESTOV, Dmitry, Moscu ul, 117602 (RU)
(74) Representative: Kohn, Philippe
(86) International application number: MX0100032
(87) International publication number: WO01091542

(57) **Abstract**

Application: in ecology, particularly for. reduction of contamination in the ground level layer of the air by such substances as sulfur dioxide, ozone and others. The essence of the invention: the method consists in generation of the impulses of high-voltage electric field and the flow of negative ions in the ground level layer of the atmosphere. The generation of the flow of negative ions is realized continuously during nighttime, for example from 19 till 7 o'clock of local time.

## Description

### BACKGROUND

The invention belongs to the devices of artificial modification of weather conditions, particularly to the methods, which are designed to disperse fogs in airports, anti-hail protection in agriculture, to stimulate the formation of cloudiness and additional precipitation in dry periods by additional ionization of the atmosphere and influences in its electrical characteristics; and can be effectively used for artificial increasing of repetitions of weather conditions, which improves the ecological conditions in ground level layer of cities atmosphere, i.e. such conditions that help to reduce the concentration of dangerous (for health and life of people) contaminants.

There is a method of influence on atmospheric formations, which consists of generation (by an electrofilter with aerodynamic ventilator) of flow of negative ions in the ground level layer of the atmosphere in order to disperse fog [1]. V.B. Kiryukhin, P.N. Krasikov. Rain and Snow on Human's Wish. - L.: Hydrometeoizdat, 1963, p.129.

According to the obtained results, after the beginning of generation of negative ions one can observe the falling out of water drops from the fog near the equipment ([1], p.129).

The disadvantage of the known method is the lack of instructions for the possibility of its application for correction of weather conditions in order to solve ecological tasks on reduction of the concentration of dangerous contaminants in the ground level layer of the atmosphere.

There is a method of influence on atmospheric formations, which consists of generation of the narrowly directed flow of negative ions in the ground level layer of the atmosphere [2]. Karpov A.I., Protopopov V.A., Tikhonov A.P. Method of Correction of Atmospheric Processes, Technical System for Control of Atmospheric Processes, Method of Creation of Convectional Current in the Atmosphere and Ions Generator. Patent of Russian Federation No2090057, A01G 15/00 of 26.06.1996.

The disadvantage of the known method is the lack of instructions for the possibility of its application for correction of weather conditions in order to solve ecological tasks on reduction of the concentration of dangerous contaminants in the ground level layer of the atmosphere.

There is a method of influence on atmospheric formations, which consists of generation of the flow of negative ions in the ground level layer of the atmosphere [3]. D.A. Pestov. Method of Change of Weather Conditions in Local Areas of Ground Level Layer of the Atmosphere. Patent of Russian Federation No2115296, AO1G 15/00 E 01 H 13|00 of 25.06.1997.

The disadvantage of the known method is the instability of the results when applying it for correction of weather conditions in order to solve ecological tasks on reduction of maximal concentration of such dangerous contaminants as sulfur dioxide, ozone and others in the ground level layer of the atmosphere.

The nearest method in technical point among the known is the method of influence on atmospheric formations, consisting in generation of the impulses of high voltage electrical field in the ground level layer of the atmosphere above the given region [4]. M.V. Bukharov. Method of Influence on Electrical State of Clouds. Patent of Russian Federation No2080776, A01G 15/00 of 22.08.1995. The generation is realized with the help of an electrode in form of the conductive wire placed above the ground.

As the experiments have shown, by the influence on the condensation processes in the clouds and in the upper layers of the atmosphere, the known method [4] permits to make changes in the clouds and wind conditions in the way, that in the ground level layer of the atmosphere the reduction of maximal concentrations of such dangerous contaminants as sulfur dioxide, ozone and others is registered.

### DESCRIPTION

The disadvantage of this method is the instability of the results when applying for correction of weather conditions in order to solve ecological tasks on reduction of maximal concentrations of such dangerous contaminants as sulfur dioxide, ozone and others in the ground level layer of the atmosphere.

The purpose of this invention is to increase the stability of results in reduction of concentrations level of dangerous contaminants.

The purpose is reached by the following: during the influence on the atmospheric formations, which includes the generation of impulses of high voltage electric field in the ground level layer of the atmosphere above the given area, according to the invention, the generation of the flow the negative ions is realized additionally into the ground level layer of the atmosphere in the same area.

Moreover, the generation of the flow of negative ions is realized continuously during nighttime, for example from 19 till 7 o'clock of local time.

The necessity of using of the mentioned essential indications is explained by following reasons.
1. The generation of the impulses of high-voltage electric field in the ground level layer of the atmosphere above the given area is necessary to stimulate the higher frequency of appearance and higher density of cloudiness above the given area by activation of condensation processes in the upper and lower layers of the atmosphere. As a consequence, one can observe the increased absorbing (in more dense cloudiness and water vapor) of sun radiation and the reduction of the average level of maximal daily sun radiation above the given area. In its turn, this results in reduction of maximal ozone concentration level near the ground, which appears during the process of the photochemical reactions on nitrogen oxides and others reactive compounds.
   Moreover, the increasing of the quantity of the cloudiness results in increasing of repetitions of the zones of baric depressions (low barometric pressure) above the given area. In its turn, this intensifies the vertical intermixing in the atmosphere and helps to increase the repetitions of the west movement in the given area. The consequence of this is the better carrying of the dangerous contaminants out of the ground level layer of the atmosphere of given area.
   So, the generation of the impulses of high-voltage electrical field allows realizing the correction of weather conditions in the given area in the way, that with this the reduction of maximal concentration of dangerous contaminants is observed in the ground level layer of the atmosphere.
2. The generation of the flow of negative ions in the ground level layer of the atmosphere is necessary by the following reasons.
   Firstly, the created negative ions stimulate the activation of the water vapor condensation processes in the lower layers of the atmosphere of the same area, which with the simultaneous activation of condensation processes in the clouds and in the upper layers of the atmosphere (by the generation of the impulses of high-voltage electrical field) allows to get an over-summary effect in the form of intensifying of the vertical intermixing of the atmosphere in its lower layer. As a result, more significant reduction of maximal concentrations of dangerous contaminants is observed in the ground level layer of the atmosphere.
   Secondly, the additional negative ions in the ground level layer of the atmosphere cause certain positive influence on acceleration of the process of precipitation of heavy dangerous contaminants in the form the dust and small particles onto the ground.
3. As the carried out experiments have shown, the additional generation of negative ions flow in the ground level layer of the atmosphere during the period close to the sunset till the period close to the sunrise, for example from 19 till 7 o'clock of local time, provided the most notable reduction of the average maximal concentrations of dangerouscontaminants (such as sulfur dioxide, ozone and others) with the lowest consumption of energy.

To confirm the possibility of the invention's realization let's consider the specific example of its realization. For generation of the impulses of high-voltage field we shall use the device, known by description in [4], which consists of a high-voltage generator (for example, 100 kV) and of an electrode connected to it, made of a wire, electrically insulated from the ground and drawn above the surface at an altitude of, for example, 6 m.

For the generation of the flow of negative ions in the ground level layer of the atmosphere we shall use the device, known by the description in [1, 3], which consists of an ion emitter with aerodynamic ventilator, emitting (with a speed of 10-20 m/s) the cloud of ionized air with the concentration of negative ions up to 10⁸ per 1 cm into the ground level layer of the atmosphere.

This method is realized in the following way. Within the area, where it is necessary to correct the weather conditions in order to reduce the concentrations of dangerous contaminants, the source of high-voltage impulses and the negative ions generator are placed.

In the periods, when (according to the data from the stations of continuous ecological monitoring), the increased concentration of one of the dangerous contaminants is expected or in fact is observed in the atmosphere over the given area, the generation of the impulses of high-voltage electric field is realized. The amplitude of the high-voltage field could be, for example, 100 kV, and the impulse could have duration of, for example, 1 second and follow with the period of, for example, 1 minute.

At the same period and in the same area (city) the additional generation of the flow of negative ions in the ground level layer of the atmosphere is realized. Moreover, the generation of ions flow is realized continuously during the nighttime, for example from 19 till 7 o'clock of local time.

As a result of this, the increasing of stability of the reduction level of concentrations of dangerous of contaminants is reached in the wide range of weather conditions with minimal energy consumption.

As the carried out experiments and the experimental operation of the method in the town of Salamanca (Mexico), which has begun in February 2000, have shown, the proposed method allows realizing the essential reduction (on 30% and more) of average concentrations of dangerous contaminants during the long time period (for example 1-2 month and more).

## Claims

1. The method of influence on atmospheric formations, consisting in generation of the impulses of high-voltage electrical field in the ground level layer of the atmosphere above the given area, distinguishes by the additional generation of the flow of negative ions in the ground level layer of the atmosphere in the same area.

2. The method by p. 1 distinguishes that the generation of the flow of negative ions in the ground level layer of the atmosphere is realized continuously during nighttime, for example from 19 till 7 o'clock of local time.
